# EUROPÄISCHE PATENTSCHRIFT

(11) **EP 3 807 198 B1**
(45) Veröffentlichungstag und Bekanntmachung des Hinweises auf die Patenterteilung: **23.07.2025**
(21) Anmeldenummer: 19711892.0
(22) Anmeldetag: 15.03.2019
(51) Int. Cl.: B65G 54/02, H02K 41/02, H02K 41/03

(54) **MOVER FÜR EIN LANGSTATOR-SYSTEM**
MOVER FOR A LONGITUDINAL STATOR SYSTEM
MOTEUR DESTINÉ À UN SYSTÈME DE STATOR LONG

(30) Priorität: 15.06.2018 DE 102018209724
(43) Veröffentlichungstag der Anmeldung: 21.04.2021
(73) Patentinhaber: Krones AG, 93073 Neutraubling (DE)
(72) Erfinder: ELSPERGER, Stefan, Neutraubling 93073 (DE); DAVIDSON, Hartmut, 93073 Neutraubling (DE); KIESLINGER, Manfred, 93073 Neutraubling (DE)
(74) Vertreter: Grünecker Patent- und Rechtsanwälte PartG mbB
(86) Internationale Anmeldenummer: PCT/EP2019/056536
(87) Internationale Veröffentlichungsnummer: WO 2019/238284

(56) Entgegenhaltungen:
- EP-A1- 0 216 452
- WO-A1-2018/161160
- DE-A1- 102014 202 785
- JP-A- 2007 190 619
- JP-A- 2010 057 280
- US-A1- 2015 028 699
- US-B2- 6 906 789

## Beschreibung

Die vorliegende Erfindung betrifft einen Mover für einer Langstator-System gemäß Anspruch 1 sowie ein Verfahren zur Bestimmung eines Systemparameters eines Langstator-Systems gemäß Anspruch 9.

### Stand der Technik

Langstator-Systeme sind aus dem Stand der Technik bekannt. Diese bestehen aus einem gestreckten Stator (beispielsweise als Führungsschiene konzipiert) und einem oder mehreren Wagen, sogenannten Movern, die sich unter Magnetkrafteinwirkung entlang des Langstators bewegen können. Bei diesen Systemen erfolgt die Steuerung der Bewegung des Movers entlang des Langstators und auch insbesondere im Bereich von Weichen über die Einstellung der auf den Mover einwirkenden Magnetkräfte.

Die die Magnetkraft bestimmenden Magnetfelder werden zwar durch die Spulen in dem Langstator üblicherweise zuverlässig erzeugt, die auf den Mover einwirkenden Magnetkräfte sind jedoch auch von anderen Systemparametern abhängig, die kaum oder nur schwierig gesteuert werden können. Ein Mover und ein Verfahren nach den Oberbegriffen der Ansprüche 1 und 9 ist aus der US 2015/028699 A1 bekannt.

### Aufgabe

Der vorliegenden Erfindung liegt daher die Aufgabe zugrunde, eine genaue Bestimmung von Systemparametern eines Langstator-Systems zu ermöglichen, um die Genauigkeit der Steuerung der Bewegung der Mover zu verbessern.

### Lösung

Diese Aufgabe wird durch den Mover für ein Langstator-System gemäß Anspruch 1 und das Verfahren zum Bestimmen eines Systemparameters eines Langstator-Systems gemäß Anspruch 9 gelöst. Vorteilhafte Weiterbildungen der Erfindung sind in den Unteransprüchen erfasst.

Der erfindungsgemäße Mover für ein Langstator-System umfasst einen Primärteil mit Elementen zum beweglichen Anordnen des Movers an einem Langstator und einen Aufnahmebereich, in dem ein Sensor zum positionsabhängigen Messen wenigstens eines Systemparameters angeordnet ist, wobei der Sensor lösbar mit dem Aufnahmebereich verbunden sein kann.

Das Primärteil ist grundsätzlich als jede Struktur zu verstehen, die Teil des Movers ist und die beweglichen Elemente umfasst. Hier kommen beispielsweise Rahmenstrukturen als Primärteile in Betracht, wobei in die Rahmen auch später beschriebene Sekundärteile eingebracht werden können.

Die positionsabhängige Messung des Systemparameters bezieht sich dabei auf die Messung des Systemparameters derart, dass ein Rückschluss auf die Position des Movers relativ zum Langstator möglich ist, beispielsweise durch Speichern von Messpaaren in der Form "Position-Wert des Systemparameters". Der Systemparameter kann beispielsweise eine auf den Sensor einwirkende Magnetkraft oder der Abstand des Sensors zum Langstator, auf dem der Mover entlangläuft, sein. Auch andere Parameter, die das System aus dem Langstator und dem Mover charakterisieren und insbesondere relevant für die auf den Mover einwirkende Magnetkraft sind, können mit geeigneten Sensoren bestimmt werden.

Erfindungsgemäß umfasst der Sensor eine Wägezelle, die ortsfest mit dem Mover verbunden ist, und ein Sekundärelement, das in Geometrie und/oder seiner mit dem Langstator in Betrieb austauschbaren Magnetkraft einem Sekundärteil des Movers entspricht, wobei die Wägezelle eine auf das Sekundärelement wirkende Kraft bei Bewegung des Movers entlang des Langstators unter Magnetkrafteinwirkung messen kann.

Unter dem Sekundärteil des Movers wird das standardmäßig in den Mover eingebaute Element verstanden. Dabei handelt es sich üblicherweise um einen Magneten oder um ein magnetisierbares Material, auf das die von dem Langstator bewirkte Magnetkraft einwirkt und durch welches letztlich der Vortrieb des Movers entlang des Langstators bewirkt wird. Hier kann speziell auch vorgesehen sein, dass das Sekundärteil mit dem Sekundärelement identisch ist und lediglich die übliche Aufhängung/Verbindung des Sekundärteils mit dem Primärteil durch die Wägezelle ersetzt wird. In jedem Fall ist das Sekundärelement so ausgebildet, dass es mit der Wägezelle verbunden werden kann. Diese Ausführungsform erlaubt die Messung der auf den Mover einwirkenden Magnetkräfte unter Bedingungen, wie sie ansonsten auch im normalen Betrieb auftreten würden, da der Mover als solcher, insbesondere der Primärteil, wie ein üblicherweise mit dem Langstator verwendeter Mover ausgestaltet sein und durch den Einbau der Wägezelle mit dem Sekundärelement nur geringfügige Änderungen gegenüber einem solchen üblichen Mover am System vorgenommen werden.

In einer Weiterbildung dieser Ausführungsform ist die Position der Wägezelle relativ zum Primärteil mittels Justageelementen einstellbar. Solche Justageelemente können eingesetzt werden, um mögliche Toleranzabweichungen aller beteiligten Komponenten zu kompensieren, sodass eine möglichst ideale geometrische und bezüglich der wirkenden Kräfte ideale Position eingestellt werden kann. Dabei kann es sich beispielsweise bei Justageelementen um Unterlegscheiben, Schrauben, Abstandshalter und ähnliches handeln. So können geringfügige Abweichungen beim Einbau der Wägezelle kompensiert werden.

In einer Weiterbildung dieser Ausführungsformen entspricht der Abstand zwischen Mover und Langstator in am Langstator angeordneten des Movers senkrecht zur Bewegungsebene des Movers dem üblichen Abstand des Movers mit eingebautem Sekundärteil zum Langstator. Damit ist auch die Entfernung des Movers und insbesondere des Sekundärelements und der Wägezelle zum Langstator identisch mit den üblicherweise in Verbindung mit dem Langstator verwendeten Mover, so dass auch die grundsätzlich vom Abstand zum Langstator abhängige Magnetkraft sehr genau für den realen Betrieb gemessen werden kann.

In einer Weiterbildung ist die Wägezelle zum Messen einer auf das Sekundärelement einwirkenden Kraft in beide Richtungen senkrecht zur Bewegungsebene des Movers entlang des Langstators ausgebildet. Diese Ausführungsform ist insbesondere beim Messen der Systemparameter im Bereich einer Weiche des Langstator-Systems vorteilhaft, da so die auf den Mover einwirkende Magnetkraft von dem Langstator, auf dem sich der Mover zuerst bewegt, und von dem Langstator, auf den der Mover im Bereich der Weiche übergeben wird, exakt gemessen werden kann.

In einer alternativen Ausführungsform umfasst der Sensor einen Abstandsmesser zum Messen des Abstands zwischen Mover und Langstator senkrecht zur Ebene, in der sich der Mover entlang des Langstators im Betrieb bewegen kann. So kann die Größe des Luftspalts zwischen Mover und Langstator sehr exakt vermessen werden und eventuelle Fertigungs- oder Justagefehler erkannt werden. In Bereichen, in denen ein Mover beispielsweise in größerem Abstand am Langstator entlangläuft, können die Spulen des Langstators so gesteuert werden, dass die größere Entfernung durch ein stärkeres Magnetfeld kompensiert wird, um Geschwindigkeitsverluste des Movers zu vermeiden.

In einer Weiterbildung dieser Ausführungsform umfasst der Abstandsmesser eines von einer oder mehreren Tastrollen und/oder einer oder mehreren Taststiften. Tastrollen erlauben eine genaue Messung des Abstandes auch während der Bewegung des Movers entlang des Langstators. Taststifte hingegen gewährleisten eine noch genauere Abstandsmessung, werden jedoch im Stillstand des Movers verwendet, da es ansonsten zu Beschädigungen des Langstators kommen kann, wenn dieser mit dem Taststift in Kontakt ist, während der Mover entlang des Langstators bewegt wird.

Ferner kann vorgesehen sein, dass der Mover ein Positionsbestimmungssystem umfasst, das ausgebildet ist, eine Position des Movers entlang des Langstators zu bestimmen. Dies erlaubt die Zuordnung der genauen Position des Movers zu den vom Sensor gemessenen Werten für einen oder mehrere Systemparameter. Damit kann für die spätere Verwendung eine "Karte" des Systemparameters abhängig von der Position des Movers am Langstator, erstellt werden. Hierfür kann einmalig/mehrmals eine Anfangsposition festgelegt werden.

In einer weiteren Ausführungsform ist vorgesehen, dass der Mover eine Auswertelektronik zum Verarbeiten zumindest der vom Sensor aufgenommenen Messwerte umfasst. So kann eine Auswertung der vom Sensor gemessenen Systemparameter und/oder der dazu gemessenen Position in Echtzeit erfolgen, so dass ggf. auch routinemäßig im Betrieb des Langstator-Systems ein solcher Mover zum Überprüfen der Einhaltung der Systemparametertoleranz eingesetzt werden kann. Ferner können so Datenübertragungseinrichtungen, wie drahtlose Verbindungen entfallen, die ggf. negativen Einfluss auf das Langstator-System haben können. Das erfindungsgemäße Verfahren zur Bestimmung eines Systemparameters eines Langstator-Systems umfasst die Verwendung eines Movers mit einem Primärteil mit Elementen zum beweglichen Anordnen des Movers an einem Langstator und mit einem Aufnahmebereich, in dem ein Sensor zur positionsabhängigen Messung des Systemparameters angeordnet ist, wobei der Sensor lösbar mit dem Aufnahmebereich verbunden ist und der Mover an dem Langstator angeordnet ist und der Sensor wenigstens einen Systemparameter misst, während der Mover an dem Langstator angeordnet ist.

Es kann ferner vorgesehen sein, dass der Sensor den Systemparameter während einer Bewegung des Movers entlang des Langstators misst. Eine Verwendung dieses "Mess-Movers" im üblichen Betrieb des Langstator-Systems ist somit ohne größere Unterbrechungen möglich.

Erfindungsgemäß ist vorgesehen, dass der Sensor eine Wägezelle umfasst, die ortsfest mit dem Mover verbunden ist und der Sensor ferner ein Sekundärelement umfasst, das in Geometrie und/oder mit dem Langstator in Betrieb austauschbarer Magnetkraft einem Sekundärteil des Movers entspricht, wobei die Wägezelle eine auf das Sekundärelement einwirkende Kraft bei Bewegung des Movers entlang des Langstators unter Magnetkrafteinwirkung misst. Eine genaue Bestimmung der Veränderungen der Magnetkraft entlang des Langstators, die auf einen Mover einwirkt, kann so gewährleistet werden.

Alternativ kann vorgesehen sein, dass der Sensor den Abstand zwischen Mover und Langstator mittels eines Abstandsmessers zum Messen des Abstands zwischen Mover und Langstator senkrecht zur Ebene, in der sich der Mover entlang des Langstators bewegt, misst. Eine Bestimmung des Luftspalts zwischen Mover und Langstator, der einen erheblichen Einfluss auf die auf den Mover einwirkende Magnetkraft haben kann, ist so zuverlässig möglich.

Weiterhin kann vorgesehen sein, dass die von dem Sensor gemessenen Werte für den Systemparameter mittels einer Auswertelektronik des Movers verarbeitet werden. Eine Auswertung in Echtzeit und damit Kontrolle des realen Betriebs des Langstator-Systems ist so möglich.

Weiterhin kann vorgesehen sein, dass die Position des Movers während einer Bewegung entlang des Langstators mittels eines Positionsbestimmungssystems bestimmt wird. Eine Zuordnung des Systemparameters zur Position des Movers gegenüber einem Referenzpunkt am Langstator kann so erfolgen.

### Kurze Beschreibung der Figuren

- Fig. 1: zeigt eine schematische Darstellung eines Langstator-Systems gemäß einer Ausführungsform;
- Fig. 2: zeigt eine detailliertere schematische Ansicht eines Movers aus Fig. 1 gemäß einer Ausführungsform;
- Fig. 3: ist eine Expressionszeichnung des in Fig. 2 dargestellten Movers;
- Fig. 4: zeigt einen erfindungsgemäßen Mover gemäß einer weiteren Ausführungsform;
- Fig. 5: zeigt einen Schnitt entlang der A-A Ebene durch den Mover der Fig. 4;
- Fig. 6a+b: zeigen einen Mover an einer Führungsschiene (Fig. 6a) und einen Mover im Bereich einer Weiche (Fig. 6b).

### Ausführliche Beschreibung

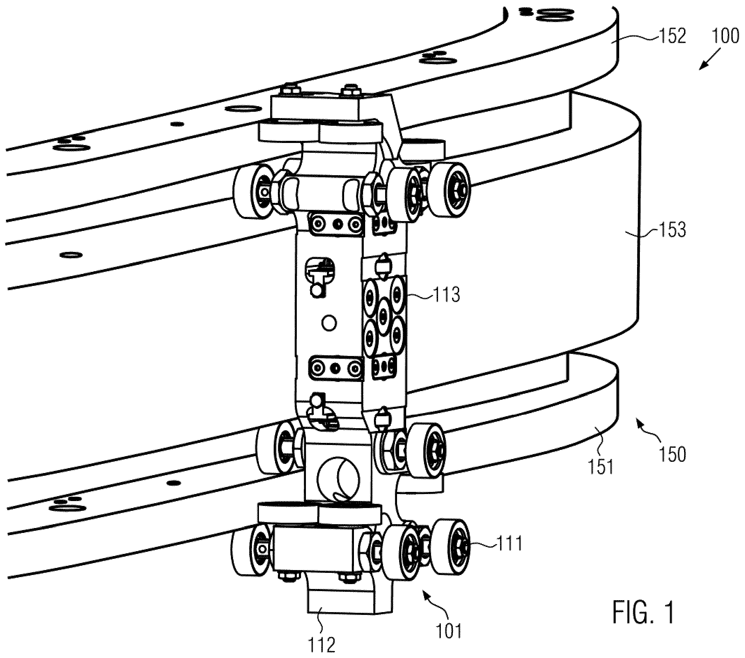

Fig. 1 zeigt eine schematische Darstellung eines Langstator-Systems 100, wie es in Transporteinrichtungen der getränkeverarbeitenden Industrie beispielsweise zum Transport von Behältern, wie Flaschen verwendet werden kann. Das Langstator-System umfasst einen Langstator 153, der lang gestreckt sein oder eine geschlossene Geometrie aufweisen kann. Der Langstator kann oberhalb und unterhalb von zwei Führungsschienen 151 und 152 begrenzt sein. Zwischen dem Langstator 153 und jeder der Führungsschienen 151 und 152 kann in der hier dargestellten Ausführungsform ein Freiraum für das bewegliche Anordnen eines Movers vorgesehen sein.

Der Mover 101 umfasst in der hier dargestellten Ausführungsform ein Primärteil 112, an dem Elemente 111 zum beweglichen Anordnen des Movers an dem Langstator und/oder den Führungen 151 und 152 angeordnet sind. Bei diesen Elementen 111 kann es sich bevorzugt um drehbare Rollen handeln, die in den Spalt zwischen dem Langstator 153 und der jeweiligen Führung 151 bzw. 152 eingepasst werden können.

Der Mover 101 verfügt ferner neben dem Primärteil 112 über einen Aufnahmebereich 113, in dem auswechselbar ein Sensor und ein Sekundärteil des Movers eingebracht werden kann. Der Aufnahmebereich 113 kann dabei auch als Aussparung im Primärteil 112 des Movers vorgesehen sein. Es kann sich dabei aber auch um ein zusätzliches Bauteil für die Aufnahme des Sensors oder des Sekundärteils handeln, das mit dem Primärteil über geeignete Verbindungen wie Schrauben verbunden werden kann.

Das Sekundärteil ist üblicherweise ein aus einem magnetisierbaren Material oder aus einem Magneten bestehender oder diesen umfassender Körper. Dieser wird bei Verwendung des Movers 101 im Betrieb des Langstator-Systems genutzt, um einen Vortrieb des Movers entlang des Langstators 153 aufgrund des mit dem Langstator erzeugten Magnetfeldes zu bewirken. Der Sekundärteil kann einen oder mehrere Magnete umfassen. Diese können mit dem Primärteil verschraubt oder in irgendeiner anderen Weise mit diesem verbunden sein.

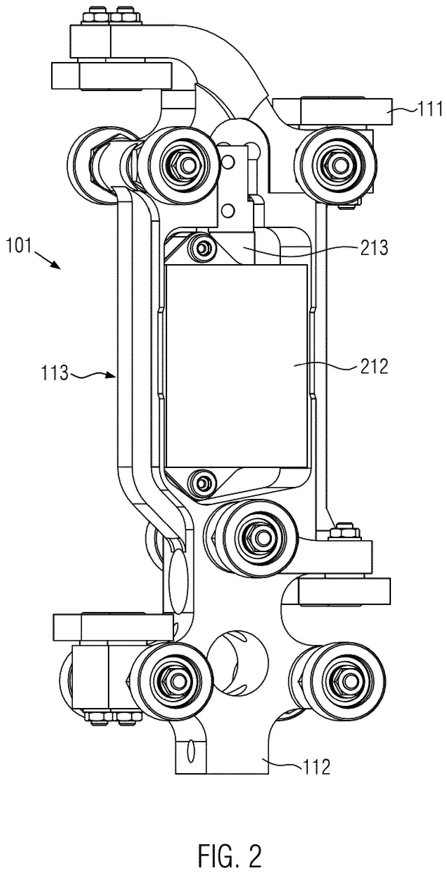

Fig. 2 zeigt eine schematische Ansicht eines erfindungsgemäßen Movers 101 in einer Ausführungsform. Auch dieser Mover umfasst den bereits beschriebenen Primärteil, in dem der Aufnahmebereich 113 angeordnet ist. Der Primärteil umfasst auch die Elemente zum beweglichen Anordnen des Movers an dem Langstator, hier durch Rollen dargestellt.

In der dargestellten Ausführungsform ist im Aufnahmebereich 113 ein Sensor umfassend eine Wägezelle 213 und ein Sekundärelement 212 angeordnet. Das Sekundärelement kann im Wesentlichen entsprechend dem Sekundärteil, wie dies in der Ausführungsform gemäß Fig. 1 beschrieben wurde, ausgebildet sein. Dies betrifft insbesondere dessen Geometrie, Gewicht und magnetische Eigenschaften, insbesondere magnetische Permeabilität und Suszeptibilität. Das Sekundärelement 212 ist erfindungsgemäß derart mit der Wägezelle 213 verbunden, dass eine auf das Sekundärelement 212 einwirkende Magnetkraft, insbesondere hervorgerufen durch den Langstator des Langstator-Systems in Fig. 1, von der Wägezelle 213 gemessen werden kann, indem auf diese eine Kraft einwirkt. Damit kann die auf das Sekundärelement einwirkende Magnetkraft abhängig von der Position des Movers am Langstator bestimmt werden. Zur positionsabhängigen Bestimmung der auf den Mover 101 einwirkenden Magnetkraft als ein Beispiel eines Systemparameters kann dem Mover zusätzlich ein Positionsbestimmungssystem, das hier nicht dargestellt ist, zugeordnet sein. Die von der Wägezelle ermittelten Messwerte und die von dem Positionsbestimmungssystem ermittelten Positionen können mit Hilfe einer Auswertelektronik (beispielsweise am Mover vorgesehen oder extern dazu) ausgewertet und zur Darstellung der Magnetkraft in Abhängigkeit von der Position am Langstator genutzt werden. Auch andere Anwendungen der gemessenen Werte für Position und Magnetkraft (oder allgemein einen Systemparameter) sind denkbar. So können diese Werte bei der Steuerung der Mover im üblichen Betrieb (beispielsweise zum Transport von Behältern) verwendet werden.

Bevorzugt kann der Sensor, bzw. die Wägezelle im Falle der Fig. 2, eine Wheatstone'sche Brücke umfassen, bei der einer der Widerstände im Spannungsteiler kraftabhängig ist. Sein Widerstand ändert sich dann von einer Nullstellung ausgehend (die einem Betrag gleich Null der einwirkenden Kräfte entsprechen kann) abhängig von der vom Sekundärelement 212 auf den Widerstand übertragenen Kraft, die bei Ausbildung des Sensors mit einer Wägezelle wie in Fig. 2 ein Maß für die auf das Sekundärelement einwirkende Magnetkraft darstellt.

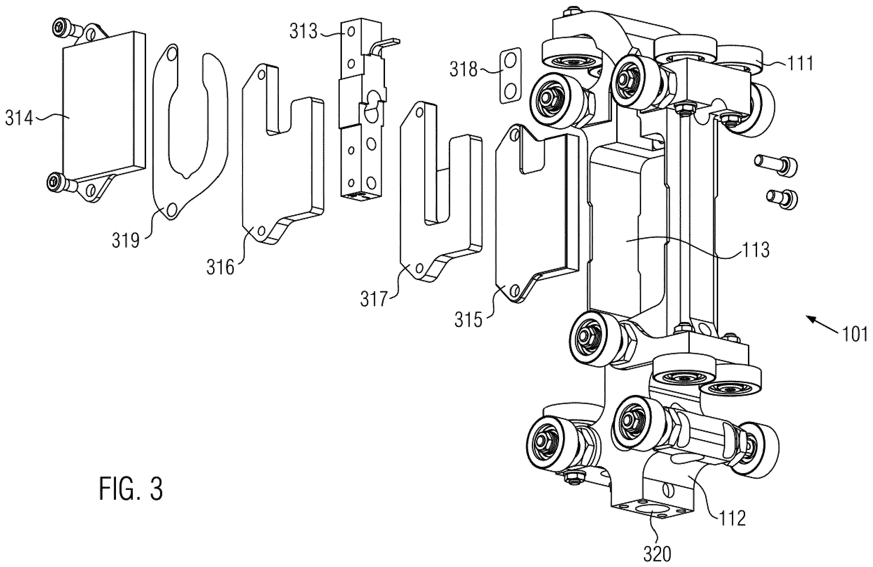

Fig. 3 zeigt eine Explosionszeichnung des Movers der Fig. 2. Hier ist insbesondere der Aufbau des Sekundärelements und dessen Verbindung mit der Wägezelle 313 außerhalb des Aufnahmebereichs 113 gezeigt. Wie hier dargestellt, kann das Sekundärelement mehrere Bauteile umfassen. So können auf zwei der Wägezelle 313 gegenüberliegenden Seiten magnetisierbare Elemente 314 und 315 vorgesehen sein, deren Funktion mit denen des Sekundärteils (siehe oben) identisch ist. Es handelt sich dabei also beispielsweise um magnetische oder magnetisierbare Materialien, die mit dem vom Langstator erzeugten Magnetfeld in Wechselwirkung treten und so einen Vortrieb des gesamten Movers bewirken können. Diese können bereits für sich in Geometrie und magnetischen Eigenschaften gleich denen eines Sekundärteils für den Mover sein.

Zusätzlich können ein oder mehrere Adapter 317 und 319 vorgesehen sein, über die die Elemente 314 und 315 mit der Wägezelle 313 verbunden werden können. Um die äußeren Abmessungen des gesamten, in den Aufnahmebereich 113 eingelassenen Sensors möglichst gleich denen eines Sekundärteils für den Mover auszugestalten, können ein oder mehrere Distanzbleche 319 vorgesehen sein, sodass auch das Volumen des gesamten Sensors an ein zu verwendendes Sekundärteil für den Mover angepasst werden kann. Damit kann auch sichergestellt werden, dass bei verschiedenen verwendeten Sekundärteilen, die sich beispielsweise in ihrer Breite unterscheiden, der verwendete Sensor jeweils eine ähnliche oder identische Geometrie aufweisen kann.

Die Wägezelle kann als Kraftmesser oder Federkraftmesser ausgebildet sein. Bevorzugt sind jedoch Ausführungsformen mittels einer Wheatstone'schen Brücke, wie sie bereits in Verbindung mit Fig. 2 aber auch ganz allgemein ohne spezielle Bezugnahme auf eine Wägezelle beschrieben wurden. Die Wägezelle selbst muss mit dem Primärteil 112 im Aufnahmebereich 113 verbunden werden. Dazu können ein oder mehrere Elemente, beispielsweise Schrauben oder Abstandshalter oder Klickverbindungen verwendet werden, die zusätzlich eine genaue Justage der Position der Wägezelle und damit auch des Sekundärelements ermöglichen. Die Wägezelle als solche ist bevorzugt ortsfest mit dem Primärteil 112 verbunden, so dass sie sich auch bei Einwirken einer Magnetkraft durch den Langstator nicht bewegt, was andernfalls zu einer Verfälschung der gemessenen Systemparameter, insbesondere der auf das Sekundärelement einwirkenden Magnetkraft führen könnte.

In der hier dargestellten Ausführungsform befinden sich die Elemente 314 und 315 auf beiden Seiten der Wägezelle. Dies erlaubt eine zuverlässige Messung der auf den gesamten Mover einwirkenden Magnetkraft nicht nur in einer Richtung und ermöglicht damit die Verwendung des Movers zum Messen von Systemparametern, insbesondere der auf ihn einwirkenden Magnetkraft auch im Bereich von Weichen, bei denen Langstatoren auf zwei gegenüberliegenden Seiten des Movers ein Magnetfeld hervorrufen. Diese Ausgestaltung des Sensors, insbesondere dessen Sekundärelement ist jedoch nicht zwingend. So kann beispielsweise auch nur ein magnetisierbares Element 314 auf einer Seite der Wägezelle angeordnet sein, falls eine Messung der Systemparameter auch nur auf dieser Seite gewünscht ist.

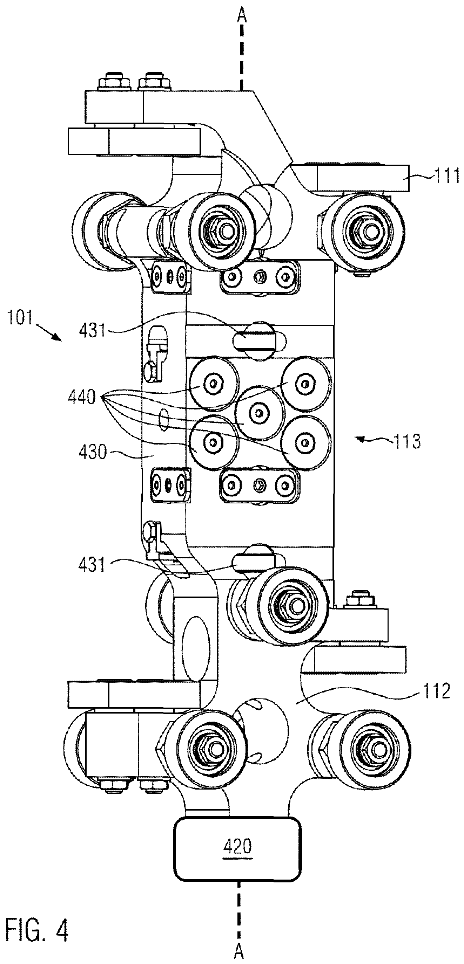

Fig. 4 zeigt eine weitere Ausführungsform des Movers 101. Der äußere Aufbau, insbesondere des Primärteils 112 und die Elemente zum beweglichen Anordnen des Movers an einen Langstator 111 können hier identisch zu den vorherigen Ausführungsformen vorgesehen sein. Da ein wesentlicher Vorteil der Erfindung darin liegt, nur die Werkstücke im Aufnahmebereich 113 auszutauschen, um den Mover neben der üblichen Verwendung im Langstator auch zum Messen von Systemparametern des Langstator-Systems nutzen zu können, ist auch der Aufnahmebereich 113 vorzugsweise identisch mit den vorherigen Ausführungsformen.

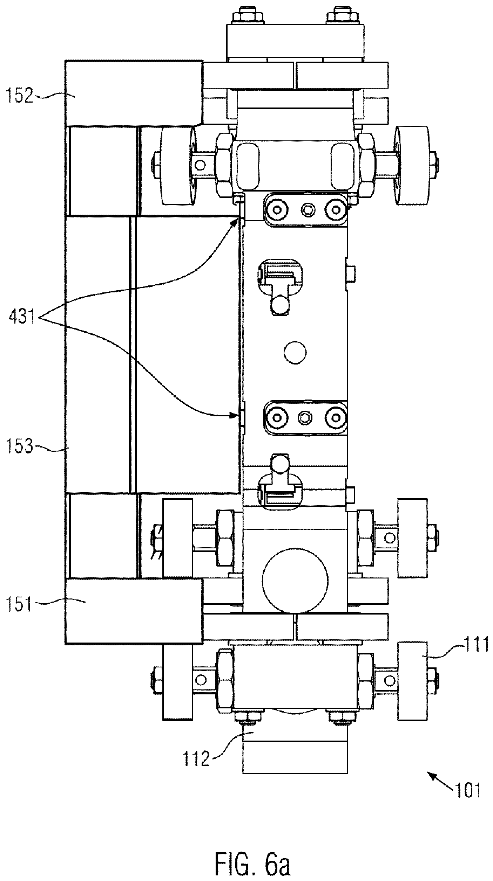

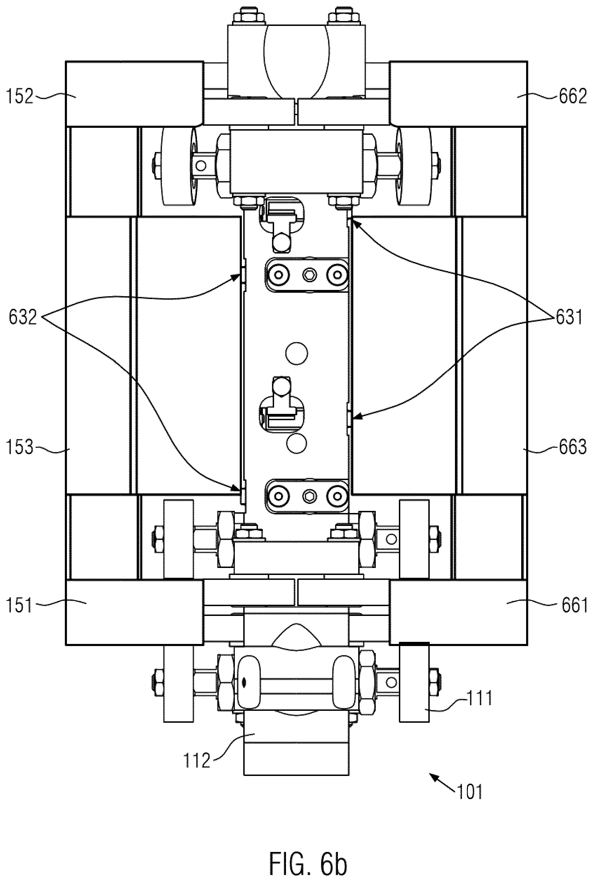

Im Gegensatz zu der in den Fig. 2 und 3 beschriebenen Ausführungsform ist in der Fig. 4 der Sensor als Abstandsmesser zum Messen des Abstands zwischen dem Mover und dem Langstator zumindest senkrecht zu der Ebene, in der sich der Mover entlang des Langstators im Betrieb bewegen kann, ausgebildet. Dazu kann der Abstandsmesser beispielsweise eine oder mehrere Tastrollen 431 umfasst. Diese sind im Aufnahmebereich 113 angeordnet und berühren bei Anordnen des Movers an dem Langstator zumindest einen Teil des Langstatorsgehäuse. Dies wird noch genauer in der Fig. 6a und 6b beschrieben.

Zusätzlich zum Abstandsmesser 431 können in dem Aufnahmebereich 113 entweder als Teil des Sensors oder zusätzlich ein oder mehrere Magnete 440 angeordnet sein, sodass der Mover durch Anlegen eines Magnetfeldes am Langstator entlang des Langstators bewegt werden kann. Bevorzugt kann der Sensor mit dem Abstandsmesser den Abstand zum Langstator während der Bewegung messen. Dazu eignen sich besonders Ausführungsformen, die abrollbare Elemente als Teil des Abstandsmessers, wie beispielsweise Tastrollen vorsehen. Alternativ kann der Abstandsmesser auch so ausgebildet sein, dass er den Abstand zum Langstator nur im Stillstand des Movers bestimmen kann. In diesem Fall können insbesondere Taststifte verwendet werden.

Falls die Bestimmung des Abstands des Movers zum Langstator in Bewegung erfolgen soll, ist die Ausführungsform bevorzugt, in der in dem Aufnahmebereich 113 zusätzlich Magnete 440 angeordnet sind, da so eine kontrollierte Bewegung des Movers möglich ist. Ist die Bestimmung des Abstandes nur im Stillstand des Movers vorgesehen, müssen solche Magnete 440 nicht zwangsläufig vorgesehen sein, da auch eine manuelle Positionierung des Movers möglich ist. Jedoch können auch in dieser Ausführung Magnete 440 vorgesehen sein, da dann unabhängig von der Ausbildung des Abstandsmessers eine Bewegung des Movers zu bestimmten Positionen mit Hilfe einer wandernden Magnetwelle entlang des Langstators möglich ist und durch die senkrecht zur Bewegungsrichtung gerichtete Magnetkraft ein Anliegen des Movers am Langstator sichergestellt werden kann.

Schematisch ist in der Fig. 4 ebenfalls eine Auswertelektronik 420 als Teil des Movers dargestellt. Diese kann ein Speichermedium, insbesondere einen nicht flüchtigen Speicher und zusätzliche eine Prozessoreinheit umfassen, die mit dem Sensor und einem ggf. vorgesehenen Positionsbestimmungssystem zum Zwecke des Datenaustausches verbunden ist. Eine Auswertung der gemessenen Systemparameter kann so direkt im Mover erfolgen. Diese Auswertung kann anschließend, also zum Beispiel nach Ende des gesamten Messvorgangs, ausgelesen und/oder ausgewertet werden, indem die Auswertelektronik mit einem Computer zum Datenaustausch (drahtlos mittels WLAN oder über USB beispielsweise) verbunden wird und die gemessenen Daten an den Computer überträgt, auf dem dann weitere Auswertungen der Daten vorgenommen werden können.

Ist zusätzlich oder alternative während des Messvorgangs der Systemparameter mit dem Mover eine Verbindung zum Datenaustausch mit einer zentralen Kontrolleinrichtung vorgesehen, kann eine Echtzeitüberwachung der vom Mover bzw. vom Sensor gemessenen Systemparameter in Abhängigkeit von der Position des Movers relativ zum Langstator erfolgen. Damit kann der Mover beispielsweise auch während des Betriebs mit dem Sensor eingesetzt werden und zusätzlich zu, mit einem üblichen Sekundärteil ausgestatteten Movern entlang des Langstators bewegt werden, so dass die Systemparameter kontinuierlich aufgezeichnet werden können.

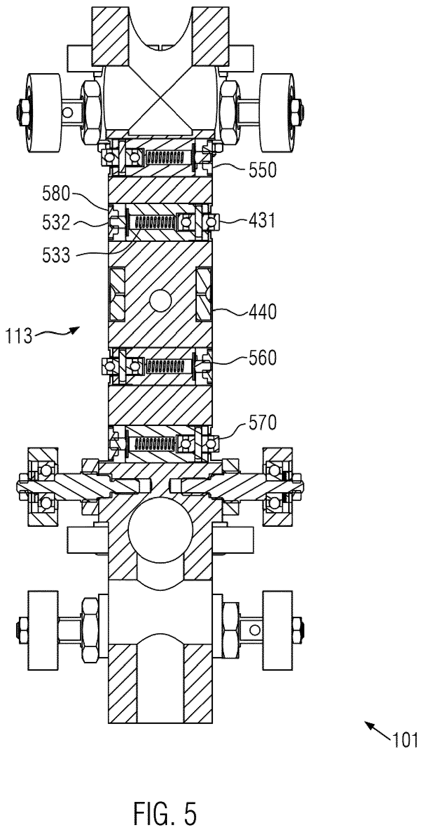

Die Fig. 5 zeigt einen Schnitt quer durch die A-A Ebene des in Fig. 4 dargestellten Movers, also entlang der Mittellinie des Movers. Wie zu erkennen, umfasst der Sensor hier vier Abstandsmesser 550 bis 580. Jeder dieser Abstandsmesser umfasst in einer Ausführungsform eine Kontaktfläche, beispielsweise eine hier gezeigte Tastrolle 431, mit der die Oberfläche des Langstators berührt werden kann. Diese Tastrolle 431 wird gegen die Oberfläche des Langstatorgehäuses durch ein Federelement 533 vorgespannt, so dass das Tastelement den Langstator stets berührt. Ferner kann ein Einstellelement 532 zum Einstellen der Vorspannung durch das Federelement vorgesehen sein. Dabei kann es sich beispielsweise um eine Schraube handeln, um die die Feder zum Teil gewickelt ist, und je nach Drehposition der Schraube die Vorspannung der Feder erhöht oder verringert werden.

In der in Fig. 5 dargestellten Ausführungsform umfasst der Mover 101 zwei Abstandsmesser 550 und 560, die auf die in der Abbildung linken Seite weisen und den Abstand zum Langstator in dieser Richtung messen können. Die übrigen Abstandsmesser 570 und 580 können den Abstand zu einer auf der anderen Seite liegenden Führung oder zu einem auf der anderen Seite liegenden Stator bzw. Langstator messen. Der Abstand kann beispielsweise über eine Wheatstone'sche Brücke, wie sie bereits oben beschrieben wurde, direkt ermittelt werden und an eine geeignete Kontrolleinheit übertragen werden. Dazu wird in dieser Ausführungsform einer der Widerstände im Spannungsteiler der Wheatstone'schen Brücke so vorgesehen, dass sich dessen Widerstandswert in Abhängigkeit des Abstands des Movers zum Langstator ausgehend von einer definierten Nullposition ändert.

Hier sind aber auch andere Ausführungsformen, insbesondere mit Hilfe eines elektronischen Maßbandes denkbar. Grundsätzlich erlaubt die Abstandsmessung bei geeigneter Festlegung eines Nullpunktes des Abstandes direkt an der, die Oberfläche des Movers begrenzenden Oberfläche die Bestimmung der Größe des Luftspalts zwischen Langstator und Mover. Diese Größe ist insbesondere relevant, um Rückschlüsse auf die in diesem Abstand wirkenden Magnetkräfte zu ziehen, die letztlich die Bewegung des Movers bestimmen.

Während in der hier dargestellten Ausführungsform Tastrollen 431 beschrieben wurden, können anstelle dessen auch Taststifte verwendet werden. Die Federelemente 533 können als mechanische Federn ausgebildet sein. Auch andere Ausführungformen mit flexiblen Elementen sind jedoch denkbar.

Fig. 6a zeigt einen Querschnitt durch einen Langstator und einen sich darauf bewegenden Mover entlang einer Ebene senkrecht zur Bewegungsrichtung des Movers. der Mover 101 ist analog zu dem in Fig. 4 und Fig. 5 beschriebenen Mover ausgebildet. In dieser Ausführungsform werden als Abstandsmesser Tastrollen und die in Fig. 5 beschriebenen weiteren Elemente, wie Federelemente genutzt. Wie zu erkennen, laufen die Tastrollen an zwei Punkten am Langstator entlang, was die genaue Bestimmung des Abstands der durch den Langstator definierten äußeren Ebene, die in Richtung des Movers weist, ermöglicht. Ferner kann so ein von Langstator und Mover ggf. eingeschlossener Winkel ermittelt werden, um Rückschlüsse auf eventuell fehlerhafte Ausrichtungen des Langstators zu den beschriebenen Führungen, entlang denen der Mover läuft, zu ermöglichen.

Der Mover läuft entlang der Führungen 151 und 152, die sich oberhalb bzw. unterhalb des Langstators erstrecken, wobei die Rollen 111 an diesen anliegen. Zusätzlich zur Bestimmung der Größe des Luftspalts zwischen dem Langstator und dem Mover, insbesondere dem Sekundärteil, auf das die von dem Langstator erzeugten magnetischen Felder letztlich einwirken, um den Vortrieb des Movers zu bewirken, kann so also auch eine Überprüfung der relativen Ausrichtung der Komponenten des Langstator-Systems zueinander erfolgen.

Die in Fig. 6a dargestellte Ausführungsform kann nicht nur mit dem Abstandsmesser als Sensor erfolgen, sondern auch mit den in Fig. 2 und Fig. 3 beschriebenen Ausführungsformen des Movers mit einer Wägezelle und einem geeigneten Sekundärelement zur Bestimmung des auf das Sekundärelement wirkenden Magnetkräfte, womit Rückschlüsse auf die auf einen Mover mit üblichem Sekundärteil einwirkenden Kräfte möglich sind.

Fig. 6b zeigt eine weitere Ausführungsform, bei der der Mover zwischen zwei Langstatoren 153 und 663 läuft. Diese Situation stellt sich üblicherweise im Bereich von Weichen, mit Hilfe derer sich die Bewegungsrichtung des Movers ändern lässt, bzw. eine Aufspaltung von einem ersten Transportpfad in unterschiedliche Transportpfade realisiert werden kann, ein. Jedem der Langstatoren 153 und 663 sind entsprechende Führungen 151 und 661 bzw. 152 und 662 oberhalb bzw. unterhalb zugeordnet, an denen die Rollen 111 des Movers eingreifen können. In der in Fig. 6b dargestellten Ausführungsform kann beispielsweise der Mover gemäß der Fig. 5 zum Einsatz kommen, der über vier Abstandsmesser als Sensor im Aufnahmebereich verfügt. Im Bereich der Weiche ist es mit einem solchen Mover möglich, gleichzeitig den Abstand zu beiden Langstatoren 153 und 663 zu messen, um die Größe des Luftspaltes zu bestimmen. Zusätzlich können Abweichungen in der Ausrichtung der Langstatoren oder Führungen zueinander bestimmt werden.

Für die vorangegangenen Ausführungsformen unter Verwendung von Abstandsmessern ist es von Vorteil, wenn eine definierte Null-Position der Abstandsmesser bestimmt werden kann. Dies kann beispielsweise dadurch gelingen, dass der Mover auf eine waagerecht liegende, möglichst ebene Platte aufgelegt wird, so dass diese den ebenfalls möglichst eben ausgebildeten Bereich des Movers berührt, in dem die Abstandsmesser, insbesondere die Tastrollen angeordnet sind. Die Tastrollen werden dann durch die Federelemente (siehe Fig. 5) gegen diese Oberfläche vorgespannt. Sie berühren sie damit unweigerlich und die Einstellung des Abstandsmessers in dieser Position kann dann als Null-Stellung festgelegt werden. Um zu verhindern, dass der Mover durch die Vorspannung der Federelemente von der Platte weg gedrückt wird (entgegen der Schwerkraft), kann von der gegenüberliegenden Seite des Movers eine geringe Anpresskraft auf den Movers als Ganzes in Richtung der ebenen Fläche ausgeübt werden. Diese Anpresskraft kann genau so groß gewählt werden, dass die Vorspannung der Federelemente, die bestrebt ist, den Mover von der ebenen Platte, auf der er aufliegt, wegzudrücken und die schon teilweise durch die Gewichtskraft des Movers, der auf der ebenen Platte aufliegt und dessen Gewichtskraft in Richtung der ebenen Platte wirkt, kompensiert wird, möglichst vollständig ausgeglichen wird.

Bei Ausführungsformen gemäß den Fig. 2 und 3, bei denen der Sensor im Wesentlichen die Magnetkraft zwischen Langstator und Mover bzw. dessen Sekundärteil misst, ist es ebenfalls notwendig, eine Null-Stellung zu bestimmen. Dies ist insbesondere deshalb notwendig, weil es bei Verwendung der Wägezelle zu geringfügigen Verschiebungen des Sekundärelements bei einwirkender Magnetkraft kommen kann, so dass sich die Größe des Luftspalts zwischen dem Langstator und dem Mover verändert, was letztlich auch Auswirkungen auf die auf das Sekundärelement einwirkende und damit gemessene Magnetkraft hat. Hier kann eine Eichung bzw. Kompensation erfolgen, um ein realistisches Ergebnis für die gemessene Magnetkraft zu erhalten.

Zunächst kann ein Standard-Mover genutzt werden, in dessen Aufnahmebereich das üblicherweise verwendete Sekundärteil montiert ist, das gegenüber dem Mover nicht beweglich ist. Dies kann beispielsweise durch festes Verschrauben des Sekundärteils mit dem Primärteil im Aufnahmebereich erfolgen. Der so konstruierte Standard-Mover kann dann auf eine Kraft-Zugmaschine aufgelegt werden, so dass die Sekundärteile nach oben bzw. nach unten zeigen. An dem beweglichen Ende der Zugmaschine wird eine ferromagnetische Stahlplatte fixiert und in großem Abstand dieser Platte zu den Sekundärteilen bzw. zu dem Standard-Shuttle wird die Kraft der Zugmaschine auf null gesetzt. Anschließend kann der bewegliche Teil der Zugmaschine mit der ferromagnetischen Stahlplatte in Richtung des Standard-Movers verfahren. Bei für die Messung der Magnetkraft realistischen Abständen von einigen wenigen Millimetern kann nun stufenweise der geometrische Abstand zwischen der Stahlplatte und dem Sekundärteil gemessen werden. Dies kann beispielsweise mit Taststiften, wie diese zusätzlich in einem Mover gemäß den Ausführungsformen der Fig. 4 und 5 vorgesehen sein können, erfolgen. Da die Sekundärteile aus magnetischem Material bestehen, wirkt bei Annäherung der ferromagnetischen Stahlplatte eine Kraft, die nun aufgezeichnet und mit dem Abstand beispielsweise in einer elektronischen Auswerteinrichtung gespeichert werden kann.

Anschließend wird der Standard-Mover durch einen Mover mit einer Wägezelle und einem entsprechenden Sekundärelement ausgetauscht. Alternativ kann auch derselbe Primärteil verwendet werden, aber die Sekundärteile werden durch die Wägezelle und das Sekundärelement ausgetauscht bzw. allgemeiner durch den Sensor. Anschließend wird die Stahlplatte entsprechend dem vorher für das Standard-Shuttle bestimmten Kraftprofils auf den Mover zubewegt und die in den entsprechenden Abständen erhaltenen Kraftwerte werden gespeichert. Durch anschließende Subtraktion der für das Standard-Shuttle ermittelten Werte und der für den Mover mit Sensor ermittelten Werte kann eine Kompensationsfunktion abgeleitet werden, mit deren Hilfe die grundsätzlich nicht zu vermeidende Bewegung des Sekundärelements relativ zum Mover bei einwirkender Magnetkraft kompensiert werden kann.

Im Betrieb des Movers mit dem Sensor zur Bestimmung der Magnetkraft kann dann von den gemessenen Werten jeweils die Kompensationsfunktion abgezogen werden, um realistische Werte für die eigentlich auf den Mover einwirkende Magnetkraft zu erhalten, was die Genauigkeit der ermittelten Magnetkraft verbessert.

## Patentansprüche

1. Mover (101) für ein Langstator-System (100), umfassend einen Primärteil (112) mit Elementen (111) zum beweglichen Anordnen des Movers an einem Langstator (153) und einem Aufnahmebereich (113), in dem ein Sensor zum positionsabhängigen Messen wenigstens eines Systemparameters angeordnet ist, wobei der Sensor lösbar mit dem Aufnahmebereich verbunden ist,
**dadurch gekennzeichnet, dass**
der Sensor eine Wägezelle (213), die ortsfest mit dem Mover verbunden ist, und ein Sekundärelement (212), das in Geometrie und/oder mit dem Langstator in Betrieb austauschbarer Magnetkraft einem Sekundärteil des Movers entspricht, umfasst, wobei die Wägezelle (213) eine auf das Sekundärelement (212) einwirkende Kraft bei Bewegung des Movers (101) entlang des Langstators (153) unter Magnetkrafteinwirkung messen kann.

2. Mover (101) nach Anspruch 1, wobei die Position der Wägezelle (213) relativ zum Primärteil (112) mittels Justageelementen einstellbar ist.

3. Mover (101) nach Anspruch 1 oder 2, wobei im am Langstator (153) angeordneten Zustand des Movers (101) der Abstand senkrecht zur Bewegungsebene des Movers (101) entlang des Langstators (153) zwischen Mover (101) und Langstator (153) einem Nominalabstand des Movers (101) mit eingebautem Sekundärteil zum Langstator (153) entspricht.

4. Mover (101) nach einem der Ansprüche 1 bis 3, wobei die Wägezelle (213) zum Messen einer auf das Sekundärelement (212) einwirkenden Kraft in beide Richtungen senkrecht zur Bewegungsebene des Movers (101) entlang des Langstators (153) ausgebildet ist.

5. Mover (101) nach Anspruch 1, wobei der Sensor einen Abstandmesser zum Messen des Abstands zwischen Mover (101) und Langstator (153) senkrecht zur Ebene, in der sich der Mover (101) entlang des Langstators (153) im Betrieb bewegen kann, umfasst.

6. Mover (101) nach Anspruch 5, wobei der Abstandmesser eines von:
- eine oder mehrere Tastrollen und/oder
- einen oder mehrere Taststifte umfasst.

7. Mover nach einem der Ansprüche 1 bis 6, wobei der Mover (101) ein Positionsbestimmungssystem umfasst, das ausgebildet ist, eine Position des Movers (101) entlang des Langstators (153) zu bestimmen.

8. Mover nach einem der Ansprüche 1 bis 7, weiterhin umfassend eine Auswertelektronik zum Verarbeiten zumindest der vom Sensor aufgenommenen Messwerte.

9. Verfahren zur Bestimmung eines Systemparameters eines Langstator-Systems (100), wobei ein Mover (101) umfassend ein Primärteil (112) mit Elementen zum beweglichen Anordnen des Movers (101) an einem Langstator (153) und einen Aufnahmebereich (113), in dem ein Sensor zur positionsabhängigen Messung des Systemparameters angeordnet ist, wobei der Sensor lösbar mit dem Aufnahmebereich (113) verbunden ist, an dem Langstator (153) angeordnet wird und der Sensor wenigstens einen Systemparameter misst, während der Mover (101) an dem Langstator angeordnet ist,
**dadurch gekennzeichnet, dass**
der Sensor eine Wägezelle (213), die ortsfest mit dem Mover (101) verbunden, und ein Sekundärelement (212), das in Geometrie und/oder mit dem Langstator (153) in Betrieb austauschbarer Magnetkraft einem Sekundärteil des Movers (101) entspricht, umfasst, wobei die Wägezelle (213) eine auf das Sekundärelement (212) einwirkende Kraft bei Bewegung des Movers (101) entlang des Langstators (153) unter Magnetkrafteinwirkung misst.

10. Verfahren nach Anspruch 9, wobei der Sensor den Systemparameter während einer Bewegung des Movers (101) entlang des Langstators (153) misst.

11. Verfahren nach Anspruch 9 oder 10, wobei der Sensor den Abstand zwischen Mover (101) und Langstator (153) mittels eines Abstandmesser zum Messen des Abstands zwischen Mover (101) und Langstator (153) senkrecht zur Ebene, in der sich der Mover (101) entlang des Langstators (153) bewegt, misst.

12. Verfahren nach einem der Ansprüche 9 bis 11, wobei die von dem Sensor gemessenen Werte für den Systemparameter mittels einer Auswertelektronik des Movers (101) verarbeitet werden.

13. Verfahren nach einem der Ansprüche 9 bis 12, wobei die Position des Movers (101) während einer Bewegung entlang des Langstators (153) mittels eines Positionsbestimmungssystems bestimmt wird.

## Claims

1. A mover (101) for a long-stator system (100), comprising a primary part (112) with elements (111) for movably arranging the mover on a long-stator (153) and an accommodating area (113), in which a sensor for position-dependent measurement of at least one system parameter is arranged, the sensor being releasably connected to the accommodating area, **characterized in that** the sensor comprises a load cell (213), which is connected to the mover in a stationary manner, and a secondary element (212) corresponding to a secondary part of the mover as regards its geometry and/or a magnetic force exchangeable with the long-stator during operation, wherein the load cell (213) is able to measure a force acting on the secondary element (212) when the mover (101) moves along the long-stator (153) under the influence of a magnetic force.

2. The mover (101) according to claim 1, wherein the position of the load cell (213) relative to the primary part (112) can be adjusted by means of adjustment elements.

3. The mover (101) according to claim 1 or 2, wherein, in a condition in which the mover (101) is arranged on the long-stator (153), the distance between the mover (101) and the long-stator (153) perpendicular to the plane of movement of the mover (101) along the long-stator (153) corresponds to a nominal distance between the mover (101) with the installed secondary part and the long-stator (153).

4. The mover (101) according to one of the claims 1 to 3, wherein the load cell (213) is configured for measuring, in both directions perpendicular to the plane of movement of the mover (101) along the long-stator (153), a force acting on the secondary element (212).

5. The mover (101) according to claim 1, wherein the sensor comprises a distance meter for measuring the distance between the mover (101) and the long-stator (153) perpendicular to the plane, in which the mover (101) can move along the long-stator (153) during operation.

6. The mover (101) according to claim 5, wherein the distance meter comprises one of:
- one or a plurality of sensing rollers and/or
- one or a plurality of sensing pins.

7. The mover according to one of the claims 1 to 6, wherein the mover (101) comprises a position determination system, which is configured for determining a position of the mover (101) along the long-stator (153).

8. The mover according to one of the claims 1 to 7, further comprising an evaluation electronics for processing at least the measurement values recorded by the sensor.

9. A method for determining a system parameter of a long-stator system (100), wherein a mover (101) comprising a primary part (112) with elements for movably arranging the mover (101) on a long-stator (153) and an accommodating area (113), in which a sensor for position-dependent measurement of the system parameter is arranged, wherein the sensor is releasably connected to the accommodating area (113), is arranged on the long-stator (153) and the sensor measures at least one system parameter while the mover (101) is arranged on the long-stator, **characterized in that** the sensor comprises a load cell (213), which is connected to the mover (101) in a stationary manner, and a secondary element (212) corresponding to a secondary part of the mover (101) as regards its geometry and/or a magnetic force exchangeable with the long-stator (153) during operation, wherein the load cell (213) measures a force acting on the secondary element (212) when the mover (101) moves along the long-stator (153) under the influence of a magnetic force.

10. The method according to claim 9, wherein the sensor measures the system parameter while the mover (101) is moving along the long-stator (153).

11. The method according to claim 9 or 10, wherein the sensor measures the distance between the mover (101) and the long-stator (153) by means of a distance meter for measuring the distance between the mover (101) and the long-stator (153) perpendicular to the plane in which the mover (101) moves along the long-stator (153).

12. The method according to one of the claims 9 to 11, wherein the values for the system parameter measured by the sensor are processed by means of an evaluation electronics of the mover (101).

13. The method according to one of the claims 9 to 12, wherein the position of the mover (101) during a movement along the long-stator (153) is determined by means of a position determination system.

## Revendications

1. Dispositif de chargement (101) pour un système à stator long (100), comprenant une partie primaire (112) avec des éléments (111) pour la disposition mobile du dispositif de chargement sur un stator long (153) et une zone de réception (113), dans laquelle est disposé un capteur pour la mesure en fonction de la position d'au moins un paramètre de système, le capteur étant relié de manière amovible à la zone de réception, **caractérisé en ce que** le capteur comprend une cellule de pesage (213), qui est reliée de manière fixe au dispositif de chargement, et un élément secondaire (212) qui correspond à une partie secondaire du dispositif de chargement en termes de géométrie et/ou de force magnétique interchangeable avec le stator long en fonctionnement, la cellule de pesage (213) pouvant mesurer une force agissant sur l'élément secondaire (212) lors du déplacement du dispositif de chargement (101) le long du stator long (153) sous l'effet de la force magnétique.

2. Dispositif de chargement (101) selon la revendication **1,** dans lequel la position de la cellule de pesage (213) par rapport à la partie primaire (112) est réglable au moyen d'éléments d'ajustement.

3. Dispositif de chargement (101) selon la revendication 1 ou **2,** dans lequel, lorsque le dispositif de chargement (101) est disposé sur le stator long (153), la distance perpendiculaire au plan de déplacement du dispositif de chargement (101) le long du stator long (153) entre le dispositif de chargement (101) et le stator long (153) correspond à une distance nominale du dispositif de chargement (101) avec la partie secondaire montée par rapport au stator long (153).

4. Dispositif de chargement (101) selon l'une des revendications 1 à 3, dans lequel la cellule de pesage (213) est configurée pour mesurer une force agissant sur l'élément secondaire (212) dans les deux directions perpendiculaires au plan de déplacement du dispositif de chargement (101) le long du stator long (153).

5. Dispositif de chargement (101) selon la revendication 1, dans lequel le capteur comprend une jauge de distance pour mesurer la distance entre le dispositif de chargement (101) et le stator long (153) perpendiculairement au plan dans lequel le dispositif de chargement (101) peut se déplacer le long du stator long (153) en fonctionnement.

6. Dispositif de chargement (101) selon la revendication 5, dans lequel le dispositif de mesure de la distance est l'un de :
- un ou plusieurs rouleaux palpeurs et/ou
- comprend un ou plusieurs palpeurs.

7. Dispositif de chargement selon l'une des revendications 1 à 6, dans lequel le dispositif de chargement (101) comprend un système de détermination de position configuré pour déterminer une position du dispositif de chargement (101) le long du stator long (153).

8. Dispositif de chargement selon l'une des revendications 1 à 7, comprenant en outre un circuit électronique d'évaluation pour le traitement d'au moins les valeurs de mesure enregistrées par le capteur.

9. Procédé de détermination d'un paramètre de système d'un système à stator long (100), dans lequel un dispositif de chargement (101) comprenant une partie primaire (112) avec des éléments pour le placement mobile du dispositif de chargement (101) sur un stator long (153) et une zone de réception (113), dans laquelle est disposé un capteur pour la mesure en fonction de la position du paramètre de système, le capteur étant relié de manière amovible à la zone de réception (113), est disposé sur le stator long (153) et le capteur mesure au moins un paramètre de système, tandis que le dispositif de chargement (101) est disposé sur le stator long, **caractérisé en ce que** le capteur comprend une cellule de pesage (213) qui est reliée de manière fixe au dispositif de chargement (101), et un élément secondaire (212), dont la géométrie et/ou la force magnétique interchangeable avec le stator long (153) en fonctionnement correspond à une partie secondaire du dispositif de chargement (101), la cellule de pesage (213) mesurant une force agissant sur l'élément secondaire (212) lorsque le dispositif de chargement (101) se déplace le long du stator long (153) sous l'effet de la force magnétique.

10. Procédé selon la revendication 9, dans lequel le capteur mesure le paramètre système pendant un déplacement du dispositif de chargement (101) le long du stator long (153).

11. Procédé selon la revendication 9 ou 10, dans lequel le capteur mesure la distance entre le dispositif de chargement (101) et le stator long (153) au moyen d'un dispositif de mesure de distance pour mesurer la distance entre le dispositif de chargement (101) et le stator long (153) perpendiculairement au plan dans lequel le dispositif de chargement (101) se déplace le long du stator long (153).

12. Procédé selon l'une des revendications 9 à 11, dans lequel les valeurs mesurées par le capteur pour le paramètre du système sont traitées au moyen d'un circuit électronique d'évaluation du dispositif de chargement (101).

13. Procédé selon l'une quelconque des revendications 9 à 12, dans lequel la position du dispositif de chargement (101) est déterminée pendant un déplacement le long du stator long (153) au moyen d'un système de détermination de position.
